# EUROPEAN PATENT APPLICATION

(11) **EP 4 723 692 A1**
(43) Date of publication of application: **08.04.2026**
(21) Application number: 23939007.3
(22) Date of filing: 02.06.2023
(51) Int. Cl.: H04W 4/70

(54) **SIDELINK COMMUNICATION METHOD AND APPARATUS, AND STORAGE MEDIUM**

(71) Applicant: Beijing Xiaomi Mobile Software Co., Ltd., Beijing 100085 (CN)
(72) Inventor: JIANG, Xiaowei, Beijing 100085 (CN)
(74) Representative: Gunzelmann, Rainer
(86) International application number: PCT/CN2023/098168
(87) International publication number: WO 2024/244023

(57) **Abstract**

Embodiments of the present disclosure disclose a sidelink communication method and apparatus therefor, which may be applied to a communication system. The method comprises: triggering execution of a check procedure when a first preset condition is met, the check procedure being used to determine whether to select or reselect a sidelink (SL) positioning reference signal (PRS) sending resource. In the present solution, a check condition is preset, and execution of the check procedure is triggered when the preset condition is met, so as to implement checking of selection and reselection of the SL PRS sending resource.

## Description

### TECHNICAL FIELD

The present disclosure relates to the field of communication technologies, and in particular relates to a sidelink (SL) communication method, a sidelink communication device, and a storage medium.

### BACKGROUND

Terminals may communicate with each other via a sidelink (SL), for example, by transmitting a sidelink positioning reference signal (SL PRS) to perform SL positioning. However, there is still no definitive conclusion on the method for checking the selection and reselection of a resource for transmitting an SL PRS.

### SUMMARY

The embodiments of the present disclosure provide a sidelink communication method, a sidelink communication device, and a storage medium, so as to perform checks on the selection and reselection of a resource for transmitting an SL PRS, thereby improving the accuracy of the selection and reselection of the resource for transmitting the SL PRS.

In a first aspect, embodiments of the present disclosure provide a sidelink communication method, which is performed by a first device. The method includes: triggering execution of a check procedure in a case where a first preset condition is satisfied, where the check procedure is used for determining whether to perform a selection or reselection of a resource for transmitting an SL PRS.

In some embodiments, the method further includes: determining at least one resource for transmitting the SL PRS from a transmission resource pool in an autonomous resource allocation mode; and creating an SL grant for transmitting the SL PRS based on the at least one resource, where the SL grant indicates the at least one resource.

In some embodiments, the method further includes: stopping execution of the check procedure in a case where a second preset condition is satisfied, where the second preset condition includes: the first device determining cancellation of creating the SL grant, or the transmission resource pool being released.

In some embodiments, the first preset condition includes: SCI indicating to transmit the SL PRS being not within a first time period, where the first time period indicates a discontinuous reception (DRX) activation time of a second device, and the second device is a receiving device of the SL PRS.

In some embodiments, the SCI includes first-stage SCI and/or second-stage SCI.

In some embodiments, the first preset condition includes: a resource pool for transmitting the SL PRS being reconfigured.

In some embodiments, the method further includes: receiving reconfiguration information sent by a network device, the reconfiguration information being used to reconfigure the resource pool for transmitting the SL PRS.

In some embodiments, the first preset condition includes: no resources for creating the SL grant being selected in the resource pool for transmitting the SL PRS.

In some embodiments, the first preset condition includes: no SL PRS transmission or retransmission being performed using the SL grant during a second time period.

In some embodiments, the first preset condition includes: the transmission of the SL PRS using the SL grant not meeting a transmission requirement of the SL PRS.

In some embodiments, the transmission requirement includes at least one of: a latency requirement, a bandwidth requirement, or a reliability requirement.

In some embodiments, the transmission of the SL PRS using the SL grant not meeting the transmission requirement of the SL PRS includes at least one of: the transmission of the SL PRS using the SL grant unable to be completed within the delay requirement; the transmission of the SL PRS using the SL grant not meeting the bandwidth requirement; or the transmission of the SL PRS using the SL grant not meeting the reliability requirement for a numeric count of retransmissions or repetitions, or the transmission of the SL PRS using the SL grant not meeting the reliability requirement for a comb size, where the comb size indicates an interval between occupied resource elements (REs).

In some embodiments, the method further includes: clearing the SL grant before triggering execution of the check procedure.

In a second aspect, embodiments of the present disclosure provide a sidelink communication device, which includes a processing module configured to trigger execution of a check procedure in a case where a first preset condition is satisfied, where the check procedure is used for determining whether to perform a selection or reselection of a resource for transmitting an SL PRS.

In a third aspect, embodiments of the present disclosure provide a communication device, which includes a transceiver, a memory, and a processor connected to the transceiver and the memory, respectively, configured to control a transmission and a reception of a wireless signal from the transceiver by executing computer-executable instructions in the memory, and capable of implementing the method described in the embodiments of the first aspect of the present disclosure.

In a fourth aspect, embodiments of the present disclosure provide a computer-readable storage medium for storing instructions that, when executed, cause the method described in the embodiments of the first aspect of the present disclosure to be implemented.

The embodiments of the present disclosure provide a sidelink communication method, a sidelink communication device, and a storage medium. A first device may trigger execution of a check procedure in a case where a first preset condition is satisfied. In the solution in the present disclosure, by presetting the first condition, the first device may trigger execution of the check procedure in a case where the first condition is satisfied, so as to perform checks on the selection and reselection of a resource for transmitting an SL PRS and determine the resource for transmitting the SL PRS, thereby improving the accuracy of the selection and reselection of the resource for transmitting the SL PRS.

### BRIEF DESCRIPTION OF THE DRAWINGS

In order to more clearly illustrate the technical solutions in the embodiments of the present disclosure or the background, the drawings to be used in the embodiments of the present disclosure or the background will be described below.
FIG. 1 is a schematic diagram of the architecture of a communication system provided in an embodiment of the present disclosure.
FIG. 2 is a flowchart of a sidelink communication method provided in an embodiment of the present disclosure.
FIG. 3 is a flowchart of a sidelink communication method provided in an embodiment of the present disclosure.
FIG. 4 is a flowchart of a sidelink communication method provided in an embodiment of the present disclosure.
FIG. 5 is a flowchart of a sidelink communication method provided in an embodiment of the present disclosure.
FIG. 6 is a flowchart of a sidelink communication method provided in an embodiment of the present disclosure.
FIG. 7 is a flowchart of a sidelink communication method provided in an embodiment of the present disclosure.
FIG. 8 is a flowchart of a sidelink communication method provided in an embodiment of the present disclosure.
FIG. 9 is a flowchart of a sidelink communication method provided in an embodiment of the present disclosure.
FIG. 10 is a schematic block diagram of a sidelink communication device provided in an embodiment of the present disclosure.
FIG. 11 is a schematic block diagram of a communication device provided in an embodiment of the present disclosure.
FIG. 12 is a schematic block diagram of a chip provided in an embodiment of the present disclosure.
FIG. 13 is a schematic block diagram of a communication system provided in an embodiment of the present disclosure.

### DETAILED DESCRIPTION

Reference will now be made in detail to illustrative embodiments, examples of which are illustrated in the accompanying drawings. The following description refers to the accompanying drawings in which the same numbers in different drawings represent the same or similar elements unless otherwise represented. The implementations set forth in the following description of illustrative embodiments do not represent all implementations consistent with the present disclosure. Instead, they are merely examples of apparatuses and methods consistent with some aspects of the present disclosure as recited in the appended claims.

Terms used herein in the embodiments of the present disclosure are only for the purpose of describing specific embodiments, but should not be construed to limit the embodiments of the present disclosure. As used in the embodiments of the present disclosure and the appended claims, "a/an," and "the" in singular forms are intended to include plural forms, unless clearly indicated in the context otherwise. It should also be understood that the term "and/or" used herein represents and contains any or all possible combinations of one or more associated listed items.

It should be understood that, although terms such as "first," "second" and "third" may be used in the embodiments of the present disclosure for describing various information, these information should not be limited by these terms. These terms are only used for distinguishing information of the same type from each other. For example, first information may also be referred to as second information, and similarly, the second information may also be referred to as the first information, without departing from the scope of the embodiments of the present disclosure. As used herein, the terms "if" and "in a case where" may be construed to mean "when" or "upon" or "in response to determining" depending on the context. For the purpose of brevity and ease of understandings, the terms "greater than" or "less than", and "higher than" or "lower than" are used herein to characterize magnitude relationships. However, it will be understood by those skilled in the art that the term "greater than" also includes the meaning of "greater than or equal to", and the term "less than" also includes the meaning of "less than or equal to"; and the term "higher than" also includes the meaning of "higher than or equal to", and the term "lower than" also includes the meaning of "lower than or equal to".

To facilitate the understanding, the terminology used in the present disclosure will be introduced first.

A positioning reference signal (PRS) is used for positioning measurements, and a positioning device may perform positioning based on the measurement results.

To better understand the sidelink communication method disclosed in the embodiments of the present disclosure, the communication system to which the embodiments of the present disclosure are applicable is first described below.

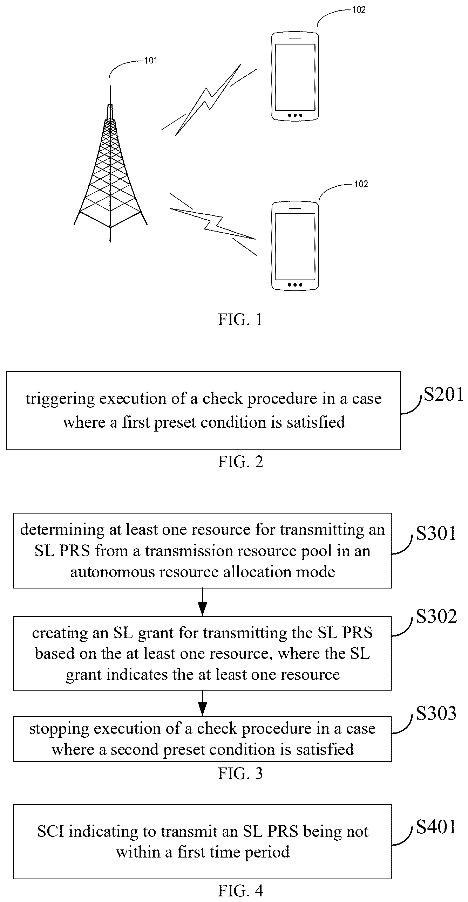

Reference is made to FIG. 1, which is a schematic diagram of the architecture of a communication system provided in an embodiment of the present disclosure. The communication system may include, but is not limited to, one network device and one terminal. Moreover, the number and form of devices shown in FIG. 1 are used as examples only, but do not constitute a limitation on the embodiments of the present disclosure. In practical applications, two or more network devices and two or more terminals may be included. Optionally, the communication system shown in FIG. 1 includes one network device 101 and one terminal 102 as an example.

It should be noted that the technical solution in this embodiment of the present disclosure may be applied to various communication systems, such as a long term evolution (LTE) system, a 5th generation (5G) mobile communication system, a 5G new radio (NR) system, or other new future mobile communication systems. It should also be noted that the sidelink in the embodiments of the present disclosure may also be referred to as a sidelink or a straight-through link.

The network device 101 in the embodiments of the present disclosure may be an entity on the network side for transmitting or receiving signals. For example, the network device 101 may be evolved NodeBs (eNBs), transmission reception points (TRPs), next generation NodeBs (gNBs) in NR systems, base stations in other future mobile communication systems, or access nodes in wireless fidelity (Wi-Fi) systems, and the like. The specific technology and the specific device form adopted by the network device are not limited in the embodiments of the present disclosure. The network device 101 provided in the embodiments of the present disclosure may be composed of a centralized unit (CU) and a distributed unit (DU), in which the CU may also be referred to as a control unit. The CU-DU structure may be used to split the protocol layer of the network device 101, such as the base station, and the functions of some protocol layers are placed in the CU for centralized control, and the functions of some or all of the remaining protocol layers are distributed in the DU, and the DU is centrally controlled by the CU.

The terminal 102 in the embodiments of the present disclosure may be an entity on the user side for receiving or transmitting signals, such as a mobile phone. The terminal may also be called a terminal device, a user equipment (UE), a mobile station (MS), a mobile terminal (MT), or the like. The terminal may be a car with a communication function, a smart car, a mobile phone, a wearable device, a tablet computer (Pad), a computer with a wireless transceiver function, a virtual reality (VR) terminal, an augmented reality (AR) terminal, a wireless terminal in industrial control, a wireless terminal in self-driving, a wireless terminal in a remote medical surgery, a wireless terminal in smart grid, a wireless terminal in transportation safety, a wireless terminal in a smart city, a wireless terminal in a smart home, or the like. The specific technology and specific device form adopted by the terminal are not limited in the embodiments of the present disclosure.

There are four sidelink transmission modes in the sidelink communication. Sidelink transmission mode 1 and sidelink transmission mode 2 are used for the device-to-device (D2D) communication. Sidelink transmission mode 3 and sidelink transmission mode 4 are used for the vehicle-to-everything (V2X) communication. When sidelink transmission mode 3 is used, resource allocation is scheduled by the network device 101. Specifically, the network device 101 may send resource allocation information to the terminal 102, and then the terminal 102 may allocate resources to a second terminal, so that the second terminal may send information to the network device 101 via the allocated resources. In the V2X communication, a terminal with a better signal or a higher reliability may be used as the terminal 102. The first terminal mentioned in this embodiment of the present disclosure may refer to the terminal 102, and the second terminal may refer to the other terminal.

It may be understood that the communication system described in this embodiment of the present disclosure is for the purpose of more clearly illustrating the technical solution in the embodiments of the present disclosure, but does not constitute a limitation on the technical solution provided in the embodiments of the present disclosure. Those of ordinary skill in the art may know that with the evolution of the system architecture and the emergence of new business scenarios, the technical solution provided in this embodiment of the present disclosure is also applicable to similar technical problems.

The method provided in the present disclosure may be applied to an SL positioning service or other services that include sending SL grants. The SL positioning service includes SL absolute positioning, SL relative positioning, and ranging. The absolute positioning is determining the absolute coordinates of the UE, the relative positioning is determining the coordinates of the UE relative to a reference point, and the ranging is determining the distance and/or the angle of the UE relative to a reference point. Positioning methods include, but are not limited to, SL Round Trip Time (RTT), SL Time Difference of Arrival (TDOA), SL Angle of Arrival (AOA), SL carrier phases, and the like, or in combination with UU positioning (radio interface positioning between the UE and a base station).

It should be noted that the sidelink communication method provided in any embodiment of the present disclosure may be executed alone, or may be executed together with possible implementations in other embodiments, or together with any technical solution in related technologies.

The sidelink communication method, the sidelink communication device, and the storage medium provided in the present disclosure will be described below in detail with reference to the accompanying drawings.

Reference is made to FIG. 2, which is a flowchart illustrating a sidelink communication method provided in an embodiment of the present disclosure. This method is performed by a first device. As shown in FIG. 2, the method includes, but is not limited to, the following step.

At step S201, it is triggered to execute a check procedure in a case where a first preset condition is satisfied.

In some embodiments of the present disclosure, the first device performs a check procedure on the selection or reselection of a resource for transmitting an SL PRS in a case where a first preset condition is satisfied.

In some embodiments of the present disclosure, the check procedure is used for determining whether to perform a selection or reselection of a resource for transmitting an SL PRS.

In some embodiments of the present disclosure, the first device is a device that transmits the SL PRS. The name of the first device is not limited in the present disclosure, which may be, for example, a transmitting device or an inspecting device; and the type of the first device is not limited in the present disclosure, which may be, for example, a device specifically used for transmitting the SL PRS, or other devices that include the function for transmitting the SL PRS.

In some embodiments of the present disclosure, the first preset condition includes SCI indicating to transmit the SL PRS being not within a first time period, a resource pool for transmitting the SL PRS being reconfigured, no resources for creating an SL grant being selected in the resource pool for transmitting the SL PRS, no SL PRS transmission or retransmission being performed using the SL grant during a second time period, and the transmission of the SL PRS using the SL grant not meeting a transmission requirement of the SL PRS.

For example, if the resource pool for transmitting the SL PRS is reconfigured, the first device may perform a check procedure on the selection or reselection of a resource for transmitting an SL PRS.

In summary, according to the sidelink communication method provided in the present disclosure, the method is performed by a first device, and includes triggering execution of a check procedure in a case where a first preset condition is satisfied, where the check procedure is used for determining whether to perform a selection or reselection of a resource for transmitting an SL PRS. In this solution, by presetting a check condition, it is triggered to execute the check procedure in a case where the preset condition is satisfied, so as to perform checks on the selection and reselection of the resource for transmitting the SL PRS and determine the resource for transmitting the SL PRS, thereby improving the accuracy of the selection and reselection of the resource for transmitting the SL PRS.

Reference is made to FIG. 3, which is a flowchart illustrating a sidelink communication method provided in an embodiment of the present disclosure. This method is performed by a first device. The embodiment shown in FIG. 3 is a further supplement to the embodiment shown in FIG. 2. The method includes, but is not limited to, the following steps.

At S301, at least one resource for transmitting an SL PRS is determined from a transmission resource pool in an autonomous resource allocation mode.

In some embodiments of the present disclosure, the first device, in an autonomous resource allocation mode, may determine at least one resource for transmitting an SL PRS from a transmission resource pool, so as to create an SL grant based on the at least one resource.

In some embodiments of the present disclosure, the first device may determine its own resource allocation mode, that is, determine whether the first device is in a network scheduling-based resource allocation mode or an autonomous resource allocation mode.

In some embodiments of the present disclosure, the configuration mode of the transmission resource pool is not limited, and the transmission resource pool may be configured by a network device or preconfigured; and the type of the transmission resource pool is not limited in the present disclosure, and the transmission resource pool may be a resource pool dedicated to the SL PRS or a resource pool shared with sidelink data (SL data).

In some embodiments of the present disclosure, an SL grant created based on the selected resource indicates the selected resource in the transmission resource pool.

For example, the first device determines its own resource allocation mode to be an autonomous resource allocation mode. In this mode, the first device determines two resources for transmitting the SL PRS in the transmission resource pool, and creates SL grants based on the determined two resources.

At step S302, an SL grant for transmitting the SL PRS is created based on the at least one resource.

In some embodiments of the present disclosure, the first device may create an SL grant for transmitting the SL PRS based on the at least one resource, so as to send the SL grant to a receiving device.

In some embodiments of the present disclosure, the resources indicated by the SL grant may be one or more resources in the transmission resource pool, which is not limited in the present disclosure.

In some embodiments of the present disclosure, the resources indicated by the SL grant may be all the resources required by a terminal at a certain moment, or may include reserved resources required at other moments in a certain time period, which is not limited in the present disclosure.

For example, the first device creates an SL grant based on two resources determined in the transmission resource pool, where the SL grant indicates two resources for transmitting the SL PRS determined from the transmission resource pool.

At step S303, the execution of a check procedure is stopped in a case where a second preset condition is satisfied.

In some embodiments of the present disclosure, the first device stops execution of the check procedure in a case where a second preset condition is satisfied.

In some embodiments of the present disclosure, the second preset condition includes the first device determining cancellation of creating the SL grant, or the transmission resource pool being released.

In some embodiments of the present disclosure, the first device completes the creation of the SL grant, and the first device needs to continuously perform the check procedure to evaluate whether the created SL grant may continue to be used.

In some embodiments of the present disclosure, the first device cancels one or more locations during its service, at which point the first device stops execution of the check procedure.

Optionally, if the transmission resource pool selected by the first device is released, the first device may receive a resource pool release message based on configuration information, at which point the first device stops execution of the check procedure.

Optionally, the first device may rest based on the configuration information, at which point the first device stops execution of the check procedure.

For example, the first device completes the creation of the SL grant, and continuously performs the check procedure. At a certain moment, the first device receives a message that the transmission resource pool has been released, and stops execution of the check procedure.

In some embodiments of the present disclosure, step S303 is optional, and the first device may decide whether to perform this step based on the communication service.

In summary, the sidelink communication method provided in the present disclosure includes: determining at least one resource for transmitting an SL PRS from a transmission resource pool in an autonomous resource allocation mode; creating an SL grant for transmitting the SL PRS based on the at least one resource, where the SL grant indicates the at least one resource; and stopping execution of a check procedure in a case where a second preset condition is satisfied. In this solution, the first device determines the SL grant from the transmission resource pool in the autonomous resource allocation mode, and determines the required resources. At the same time, in this solution, it is provided that the execution of the check procedure is stopped under the second preset condition, thereby realizing a method for terminating the checks on the selection and reselection of a resource for transmitting an SL PRS.

Reference is made to FIG. 4, which is a flowchart illustrating a sidelink communication method provided in an embodiment of the present disclosure. This method is performed by a first device. The step 101 is further described in the embodiment shown in FIG. 4. The method may include, but is not limited to, the following step.

At step S401, SCI indicating to transmit an SL PRS is not within a first time period.

In some embodiments of the present disclosure, the first device is configured to trigger execution of a check procedure in a case where SCI indicating to transmit an SL PRS is not within a first time period.

In some embodiments of the present disclosure, the first preset condition includes SCI indicating to transmit the SL PRS being not within a first time period, where the first time period indicates a DRX activation time of a second device, and the second device is a receiving device of the SL PRS.

In some embodiments of the present disclosure, the name of the second device is not limited, which may be, for example, a "receiving device", a "receiving terminal" or the like; and the type of the second device is not limited in the present disclosure, which may be, for example, a device specifically used for receiving the SL PRS, or other devices that include the function of receiving the SL PRS.

In some embodiments of the present disclosure, the first device transmits SCI to the second device to control the second device, and the second device needs to monitor the SCI during the DRX activation time.

In some embodiments of the present disclosure, the first device transmits SCI in two stages. Based on the transmission stage, the SCI includes first-stage SCI and/or second-stage SCI, where the first-stage SCI is used to transmit partial information of the selected resource, and the second-stage SCI is used to transmit specific information of the selected resource.

For example, if the SCI information sent by the first device is not within the DRX activation time of the second device, the first device may trigger execution of a check on the selection and reselection of a transmission resource.

In some embodiments of the present disclosure, step S401 is optional, and the first device may decide whether to perform this step based on the communication service.

In summary, according to the sidelink communication method provided in the present disclosure, the first preset condition includes SCI indicating to transmit the SL PRS being not within a first time period, where the first time period indicates a DRX activation time of a second device, and the second device is a receiving device of the SL PRS; and it is triggered to execute a check procedure. In this solution, by setting the first preset condition, it is triggered to execute the check procedure in a case where the first preset condition is satisfied, so as to determine the resource for transmitting the SL PRS, thereby improving the accuracy of the selection and reselection of the resource for transmitting the SL PRS.

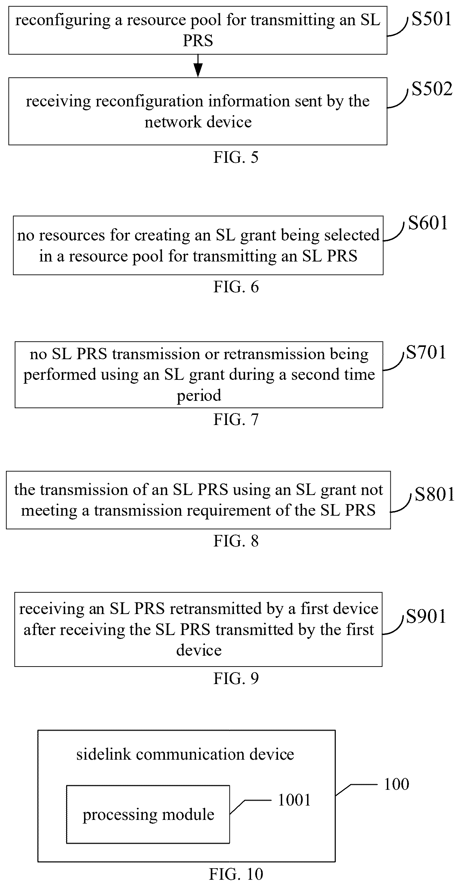

Reference is made to FIG. 5, which is a flowchart illustrating a sidelink communication method provided in an embodiment of the present disclosure. This method is performed by a first device. The step 101 is further described in the embodiment shown in FIG. 5. The method may include, but is not limited to, the following steps.

At step S501, a resource pool for transmitting an SL PRS is reconfigured.

In some embodiments of the present disclosure, the resource pool used by the first device to transmit the SL PRS is reconfigured, and it is triggered to execute a check procedure.

In some embodiments of the present disclosure, the first preset condition includes the resource pool for transmitting the SL PRS being reconfigured.

In some embodiments of the present disclosure, the resource pool for transmitting the SL PRS being reconfigured may refer to being reconfigured by a network device, or being preconfigured again. For example, the first device may receive resource pool reconfiguration information from the network device.

At step S502, reconfiguration information sent by the network device is received.

In some embodiments of the present disclosure, the first device may receive reconfiguration information sent by the network device to reconfigure the resource pool for transmitting the SL PRS.

In some embodiments of the present disclosure, the reconfiguration information is used to reconfigure the resource pool for transmitting the SL PRS.

In some embodiments of the present disclosure, the network device may send reconfiguration information to the first device by sending a message or signaling. For example, the network device sends a first signaling to the first device, and the first signaling may include reconfiguration information for the resource pool for transmitting the SL PRS. Correspondingly, the first device may receive the first signaling. The first signaling may be, for example, downlink control information (DCI) signaling, but is not limited to this, and may also be other signalings (such as radio resource control (RRC) signalings, or the like).

In some embodiments of the present disclosure, steps S501 and S502 are optional, and the first device may decide whether to perform these steps based on the communication service.

In summary, according to the sidelink communication method provided in the present disclosure, the first preset condition includes the resource pool for transmitting the SL PRS being reconfigured, and the method further includes receiving reconfiguration information sent by the network device, the reconfiguration information being used to reconfigure the resource pool for transmitting the SL PRS. In this method, by determining the solution by setting a first preset condition and receiving information sent by the network device, the execution of a check procedure is triggered when the first preset condition is satisfied, thereby re-determining the resource for transmitting the SL PRS to meet subsequent service needs.

Reference is made to FIG. 6, which is a flowchart illustrating a sidelink communication method provided in an embodiment of the present disclosure. This method is performed by a first device. The step 101 is further described in the embodiment shown in FIG. 6. The method may include, but is not limited to, the following step.

At step S601, no resources for creating an SL grant are selected in a resource pool for transmitting an SL PRS.

In some embodiments of the present disclosure, the first device triggers to execute a check procedure in a case where no resources for creating an SL grant are selected in a resource pool for transmitting an SL PRS.

In some embodiments of the present disclosure, the first preset condition may include no resources for creating an SL grant being selected in a resource pool for transmitting an SL PRS.

In some embodiments of the present disclosure, no resources for creating the SL grant are selected in the resource pool for transmitting the SL PRS, that is, the resources in the resource pool are not being utilized, at which point the execution of a check procedure is triggered to select resources for creating the SL grant in the resource pool, thereby improving the utilization rate of resources in the resource pool.

In some embodiments of the present disclosure, step S601 is optional, and the first device may decide whether to perform this step based on the communication service.

In summary, according to the sidelink communication method provided in the present disclosure, the first preset condition includes no resources for creating an SL grant being selected in a resource pool for transmitting an SL PRS. In this method, by determining the solution by setting a first preset condition, the execution of a check procedure is triggered when the first preset condition is satisfied, thereby adjusting the transmission resources, re-determining the resource for transmitting the SL PRS, and improving the utilization rate of SL PRS resources.

Reference is made to FIG. 7, which is a flowchart illustrating a sidelink communication method provided in an embodiment of the present disclosure. This method is performed by a first device. The step 101 is further described in the embodiment shown in FIG. 7. The method may include, but is not limited to, the following step.

At step S701, no SL PRS transmission or retransmission is performed using an SL grant during a second time period.

In some embodiments of the present disclosure, the first device triggers to execute a check procedure in a case where no SL PRS transmission or retransmission is performed using an SL grant during a second time period.

In some embodiments of the present disclosure, the first preset condition includes no SL PRS transmission or retransmission being performed using the SL grant during a second time period.

In some embodiments of the present disclosure, performing the SL PRS transmission using the SL grant means transmitting the SL PRS, and performing the SL PRS retransmission using the SL grant means retransmitting the SL PRS.

In some embodiments of the present disclosure, the second time period may be the most recent period of time during which the check is performed. The duration of the second time period is not limited in the present disclosure; and the time unit of the second time period is not limited, which may be seconds, milliseconds, minutes, slots, symbol numbers, or the like. The value of the second time period is a positive integer, such as 1 to 10000.

For example, the first device has not performed an SL PRS transmission or retransmission using the SL grant in the last 100 milliseconds, at which point the execution of the check procedure is triggered.

In some embodiments of the present disclosure, step S701 is optional, and the first device may decide whether to perform this step based on the communication service.

In summary, according to the sidelink communication method provided in the present disclosure, the first preset condition includes no SL PRS transmission or retransmission being performed using the SL grant during a second time period. In this method, by determining the solution by setting a first preset condition, the execution of a check procedure is triggered when the first preset condition is satisfied, so as to ensure that the SL PRS transmission or retransmission may be performed normally and improve the stability of the SL PRS transmission or retransmission.

Reference is made to FIG. 8, which is a flowchart illustrating a sidelink communication method provided in an embodiment of the present disclosure. This method is performed by a first device. The step 101 is further described in the embodiment shown in FIG. 8. The method may include, but is not limited to, the following step.

At step S801, the transmission of an SL PRS using an SL grant does not meet a transmission requirement of the SL PRS.

In some embodiments of the present disclosure, the first device triggers to execute a check procedure in a case where the transmission of the SL PRS using the SL grant does not meet a transmission requirement of the SL PRS.

In some embodiments of the present disclosure, the first preset condition includes the transmission of the SL PRS using the SL grant not meeting a transmission requirement of the SL PRS.

In some embodiments of the present disclosure, the transmission requirement includes at least one of: a latency requirement, a bandwidth requirement, or a reliability requirement.

In some embodiments of the present disclosure, the first device may determine the transmission requirement of the SL PRS by itself or by a network device, which is not limited in the present disclosure.

In some embodiments of the present disclosure, the latency requirement, the bandwidth requirement, and the reliability requirement of the SL PRS transmission may be determined in a preset manner; and the magnitude of these requirements may depend on the needs of a specific service, and the required magnitude of the requirements corresponding to different services may be different.

In some embodiments of the present disclosure, the transmission of the SL PRS using the SL grant not meeting the transmission requirement of the SL PRS includes at least one of: the transmission of the SL PRS using the SL grant unable to be completed within the delay requirement; the transmission of the SL PRS using the SL grant not meeting the bandwidth requirement; or the transmission of the SL PRS using the SL grant not meeting the reliability requirement for a numeric count of retransmissions or repetitions, or the transmission of the SL PRS using the SL grant not meeting the reliability requirement for a comb size, where the comb size indicates an interval between occupied REs.

For example, in some embodiments of the present disclosure, the SL grant selected in the initial stage of the service does not meet the needs of subsequent services, at which point the execution of a check procedure is triggered to terminate transmitting a resource for transmitting an SL PRS or reselect a resource for transmitting an SL PRS.

For example, the first device needs 10 milliseconds to transmit an SL PRS using an SL grant, and the transmission latency is 6 milliseconds, at which point the execution of the check procedure is triggered, and resources for creating the SL grant are reselected in the resource pool for transmitting the SL PRS.

In some embodiments of the present disclosure, step S801 is optional, and the first device may decide whether to perform this step based on the communication service.

In summary, according to the sidelink communication method provided in the present disclosure, the first preset condition includes the transmission of the SL PRS using the SL grant not meeting a transmission requirement of the SL PRS. In this method, by determining the solution by setting a first preset condition, the execution of a check procedure is triggered when the first preset condition is satisfied, so as to select resources that meet the transmission requirement of the SL PRS to create the SL grant, thereby improving the transmission efficiency of the SL PRS and maintaining the stability of the SL PRS transmission.

Reference is made to FIG. 9, which is a flowchart illustrating a sidelink communication method provided in an embodiment of the present disclosure. This method is performed by a first device. The embodiment shown in FIG. 9 is a further supplement to the embodiments shown in FIGS. 1 to 8. The method includes, but is not limited to, the following step.

At step S901, an SL grant is cleared before it is triggered to execute a check procedure.

In some embodiments of the present disclosure, the first device clears the SL grant before triggering execution of the check procedure, at which point the execution of the check procedure is triggered.

In some embodiments of the present disclosure, the reasons for clearing the SL grant are not limited in the present disclosure, which may be due to a change in a service or because the resources indicated by the SL grant do not meet the service requirements and the first device cancels the creation of the SL grant during the course of a service.

In some embodiments of the present disclosure, step S901 is optional, and the first device may decide whether to perform this step based on the communication service.

In summary, according to the sidelink communication method provided in the present disclosure, the method includes clearing the SL grant before triggering execution of the check procedure. In this method, the stability of the SL PRS transmission may be ensured by triggering execution of a check procedure after clearing the SL grant and selecting resources that meet the transmission requirement of the SL PRS to create the SL grant.

In the embodiments provided in the present disclosure, the methods provided in the embodiments of the present disclosure are introduced from the perspectives of the first device. In order to implement the various functions in the above-mentioned methods provided in the embodiments of the present disclosure, the first device may include a hardware structure and a software module to implement the above-mentioned various functions in the form of a hardware structure, a software module, or a hardware structure plus a software module. A certain one of the above functions may be implemented in the form of a hardware structure, a software module, or a hardware structure plus a software module.

Reference is made to FIG. 10, which is a schematic block diagram of a sidelink communication device 100 provided in an embodiment of the present disclosure. The sidelink communication device 100 shown in FIG. 10 may include a processing module 1001 configured to trigger execution of a check procedure in a case where a first preset condition is satisfied, where the check procedure is used for determining whether to perform a selection or reselection of a resource for transmitting an SL PRS.

In summary, according to the sidelink communication device provided in the present disclosure, the method is performed by a first device, which includes a processing module 1001 configured to trigger execution of a check procedure in a case where a first preset condition is satisfied, where the check procedure is used for determining whether to perform a selection or reselection of a resource for transmitting an SL PRS, so as to perform checks on the selection and reselection of the resource for transmitting the SL PRS and determine the resource for transmitting the SL PRS, thereby improving the accuracy of the selection and reselection of the resource for transmitting the SL PRS.

The communication device 100 may be a first device, an apparatus within a first device, or a device that may be used in conjunction with a first device.

The processing module 1001 is further configured to determine at least one resource for transmitting the SL PRS from a transmission resource pool in an autonomous resource allocation mode; and create an SL grant for transmitting the SL PRS based on the at least one resource, where the SL grant indicates the at least one resource.

The processing module 1001 is further configured to stop execution of the check procedure in a case where a second preset condition is satisfied, where the second preset condition comprises: the first device determining cancellation of creating the SL grant, or the transmission resource pool being released.

The first preset condition may include: SCI indicating to transmit the SL PRS being not within a first time period, where the first time period indicates a DRX activation time of a second device, and the second device is a receiving device of the SL PRS. The SCI includes first-stage SCI and/or second-stage SCI.

In a case where a first preset condition is satisfied, which is a resource pool for transmitting the SL PRS being reconfigured, the processing module 1001 is further configured to receive reconfiguration information sent by a network device, the reconfiguration information being used to reconfigure the resource pool for transmitting the SL PRS.

The first preset condition may further include: no resources for creating the SL grant being selected in the resource pool for transmitting the SL PRS; no SL PRS transmission or retransmission being performed using the SL grant during a second time period; and the transmission of the SL PRS using the SL grant not meeting a transmission requirement of the SL PRS, where the transmission requirement includes at least one of: a latency requirement, a bandwidth requirement, or a reliability requirement. The transmission of the SL PRS using the SL grant not meeting the transmission requirement of the SL PRS includes at least one of: the transmission of the SL PRS using the SL grant unable to be completed within the delay requirement; the transmission of the SL PRS using the SL grant not meeting the bandwidth requirement; or the transmission of the SL PRS using the SL grant not meeting the reliability requirement for a numeric count of retransmissions or repetitions, or the transmission of the SL PRS using the SL grant not meeting the reliability requirement for a comb size, where the comb size indicates an interval between occupied REs.

The processing module 1001 is further configured to clear the SL grant before triggering execution of the check procedure.

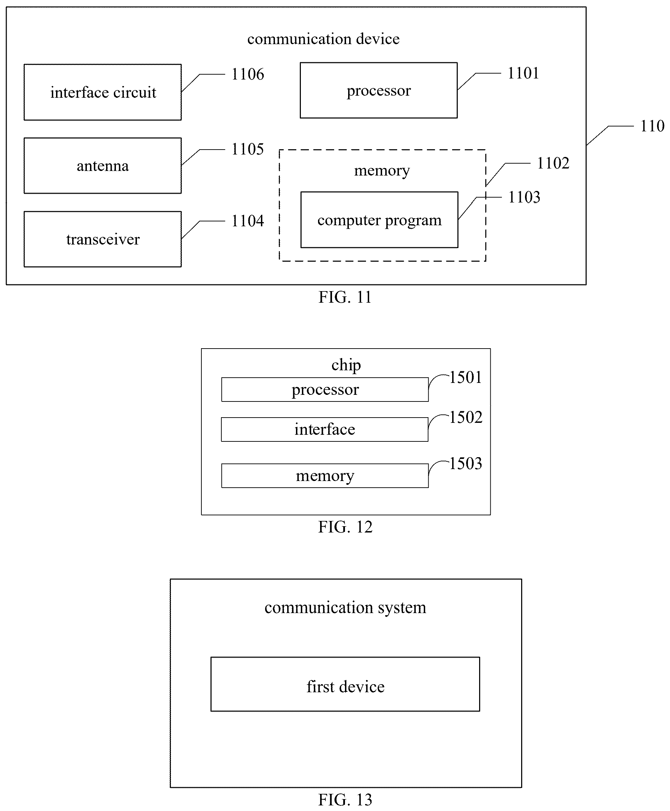

FIG. 11 is a schematic block diagram of a communication device 110 provided in an embodiment of the present disclosure. The communication device 110 may be a network device, or a terminal, or a chip, chip system, or processor that supports a network device or a terminal to implement the above methods. The communication device 110 may be configured to implement the methods as described in the above-mentioned method embodiments. For details, reference may be made to the description in the above-mentioned method embodiments.

The communication device 110 may include one or more processors 1101. The processor 1101 may be a general-purpose processor, a special-purpose processor, or the like. The processor 1101 may be, for example, a baseband processor or a central processor. The baseband processor may be configured to process a communication protocol and communication data, and the central processor may be configured to control a communication device (such as a base station, a baseband chip, a terminal, a terminal chip, a DU, a CU, or the like), execute a computer program, and process data of the computer program.

Optionally, the communication device 110 may further include one or more memories 1102 on which a computer program 1103 may be stored. The processor 1101 executes the computer program 1103 to cause the communication device 110 to perform the methods as described in the above-mentioned method embodiments.

Optionally, the memory 1102 may also have data stored therein. The communication device 110 and the memory 1102 may be provided independently or integrated together.

Optionally, the communication device 110 may further include a transceiver 1104 and an antenna 1105. The transceiver 1104 may be referred to as a transceiving unit, a transceiving device, a transceiving circuit or the like for implementing a transceiving function. The transceiver 1104 may include a receiver and a transmitter, the receiver may be referred to as a receiving device, a receiving circuit or the like for implementing a receiving function; and the transmitter may be referred to as a transmitting device, a transmitting circuit or the like for implementing a transmitting function.

Optionally, the communication device 110 may further include one or more interface circuits 1106. The interface circuit 1106 is configured to receive and transmit code instructions to the processor 1101. The processor 1101 is configured to run the code instructions to enable the communication device 110 to perform the methods described in the above-mentioned method embodiments.

The communication device 110 is a terminal configured to implement the functions of the first device in the above-mentioned embodiments.

In an implementation, the processor 1101 may include a transceiver for implementing receiving and transmitting functions. For example, the transceiver may be a transceiving circuit, an interface, or an interface circuit. The transceiving circuit, the interface, or the interface circuit for implementing the receiving and transmitting functions may be separate or integrated together. The transceiving circuit, the interface or the interface circuit may be configured to read and write code/data, or may be configured to transmit or transfer signals.

In an implementation, the processor 1101 may have stored therein the computer program 1103 that, when running on the processor 1101, enables the communication device 110 to perform the methods described in the above-mentioned method embodiments. The computer program 1103 may be embedded in the processor 1101, in which case the processor 1101 may be implemented by hardware.

In an implementation, the communication device 110 may include a circuit that may perform the transmitting, receiving or communicating function in the foregoing method embodiments. The processor and the transceiver described in the present disclosure may be implemented on an integrated circuit (IC), an analog IC, a radio frequency integrated circuit (RFIC), a mixed signal IC, an application specific integrated circuit (ASIC), a printed circuit board (PCB), an electronic device, or the like. The processor and the transceiver may also be fabricated with various IC process technologies, such as complementary metal oxide semiconductors (CMOSs), n-metal-oxide-semiconductors (NMOSs), positive channel metal oxide semiconductors (PMOSs), bipolar junction transistors (BJTs), bipolar CMOSs (BiCMOSs), silicon germanium (SiGe), gallium arsenide (GaAs), or the like.

The communication device described in the above embodiments may be a network device or a terminal, but the scope of the communication device described in the present disclosure is not limited thereto. The structure of the communication device may not be limited by FIG. 11. The communication device may be a stand-alone device or may be part of a larger device. For example, the communication device may be: (1) a stand-alone IC, or a chip, or a chip system or subsystem; (2) a set of one or more ICs, in which optionally, the set of ICs may further include a storage component for storing data and computer programs; (3) an ASIC, such as a modem; (4) a module that may be embedded in other devices; (5) a receiver, a terminal, an intelligent terminal, a cellular phone, a wireless device, a handheld device, a mobile unit, an in-vehicle device, a network device, a cloud device, an artificial intelligence device, or the like; or (6) others.

For the case where the communication device may be a chip or a chip system, reference is made to FIG. 12, which is a schematic block diagram of a chip provided in an embodiment of the present disclosure. The chip shown in FIG. 12 includes a processor 1201 and an interface 1202. The number of the processors 1201 may be one or more, and the number of the interfaces 1202 may be multiple.

Optionally, the chip further includes a memory 1203 for storing desired computer programs and data.

For the case where the chip is configured to implement the functions of the first device in the embodiments of the present disclosure, the following applies.

The processor 1201 is configured to trigger execution of a check procedure in a case where a first preset condition is satisfied, where the check procedure is used for determining whether to perform a selection or reselection of a resource for transmitting an SL PRS.

The processor 1201 is further configured to determine at least one resource for transmitting the SL PRS from a transmission resource pool in an autonomous resource allocation mode; and create an SL grant for transmitting the SL PRS based on the at least one resource, where the SL grant indicates the at least one resource.

The processor 1201 is further configured to stop execution of the check procedure in a case where a second preset condition is satisfied, where the second preset condition comprises: the first device determining cancellation of creating the SL grant, or the transmission resource pool being released.

The memory 1203 is further configured to store the first preset condition, and the first preset condition includes: SCI indicating to transmit the SL PRS being not within a first time period, where the first time period indicates a DRX activation time of a second device, and the second device is a receiving device of the SL PRS. The SCI includes first-stage SCI and/or second-stage SCI.

The memory 1203 is further configured to store the first preset condition, and the first preset condition includes: a resource pool for transmitting the SL PRS being reconfigured.

The interface 1202 is further configured to receive reconfiguration information sent by a network device, the reconfiguration information being used to reconfigure the resource pool for transmitting the SL PRS.

The memory 1203 is further configured to store the first preset condition, and the first preset condition includes: no resources for creating the SL grant being selected in the resource pool for transmitting the SL PRS; no SL PRS transmission or retransmission being performed using the SL grant during a second time period; and the transmission of the SL PRS using the SL grant not meeting a transmission requirement of the SL PRS, where the transmission requirement includes at least one of: a latency requirement, a bandwidth requirement, or a reliability requirement. The transmission of the SL PRS using the SL grant not meeting the transmission requirement of the SL PRS includes at least one of: the transmission of the SL PRS using the SL grant unable to be completed within the delay requirement; the transmission of the SL PRS using the SL grant not meeting the bandwidth requirement; or the transmission of the SL PRS using the SL grant not meeting the reliability requirement for a numeric count of retransmissions or repetitions, or the transmission of the SL PRS using the SL grant not meeting the reliability requirement for a comb size, where the comb size indicates an interval between occupied REs.

The processor 1201 is further configured to clear the SL grant before triggering execution of the check procedure.

Those skilled in the art may also understand that various illustrative logical blocks and steps listed in the embodiments of the present disclosure may be implemented by electronic hardware, computer software, or a combination thereof. Whether such functions are implemented by hardware or software depends on specific applications and design requirements of an overall system. For each specific application, those skilled in the art may use various methods to implement the functions, but such implementations should not be understood as extending beyond the protection scope of the embodiments of the present disclosure.

FIG. 13 is a schematic block diagram of a communication system provided in an embodiment of the present disclosure. As shown in FIG. 13, the communication system includes the first device configured to perform the above-mentioned methods shown in FIGS. 2 to 9.

The present disclosure further provides a readable storage medium having stored therein instructions that, when executed by a computer, cause functions of any one of the above-mentioned method embodiments to be implemented.

The present disclosure further provides a computer program product that, when executed by a computer, causes functions of any one of the above-mentioned method embodiments to be implemented.

All or some of the above embodiments may be implemented by software, hardware, firmware or any combination thereof. When implemented using the software, all or some of the above embodiments may be implemented in a form of the computer program product. The computer program product includes one or more computer programs. When the computer program is loaded and executed on the computer, all or some of the processes or functions according to embodiments of the present disclosure will be generated. The computer may be a general-purpose computer, a special-purpose computer, a computer network, or other programmable devices. The computer program may be stored in a computer-readable storage medium, or transmitted from one computer-readable storage medium to another computer-readable storage medium. For example, the computer program may be transmitted from one website, computer, server or data center to another website, computer, server or data center in a wired manner (such as via a coaxial cable, an optical fiber, a digital subscriber line DSL) or a wireless manner (for example, in an infrared, wireless, or microwave manner, or the like). The computer-readable storage medium may be any available medium that may be accessed by the computer, or a data storage device such as a server or a data center integrated by one or more available media. The available medium may be a magnetic medium (for example, a floppy disk, a hard disk, or a magnetic tape), an optical medium (for example, a high-density digital video disc DVD), a semiconductor medium (for example, a solid state disk SSD), or the like.

Those of ordinary skill in the art may understand that the first, second, and other numeral numbers involved in the present disclosure are only for convenience of description, and are not intended to limit the scope of the embodiments of the present disclosure, nor are they intended to represent a sequential order.

The term "at least one" used in the present disclosure may also be described as one or more, and the term "a plurality of" may cover two, three, four or more, which are not limited in the present disclosure. In the embodiments of the present disclosure, for a certain kind of technical features, the technical features in this kind of technical features are distinguished by terms like "first," "second," "third," "A," "B," "C," "D," and the like, and these technical features described with the terms "first," "second," "third," "A," "B," "C" and "D" have no order of precedence or size.

The corresponding relationships shown in the tables in the present disclosure may be configured or predefined. The values of information in each table are only given by way of example and may be configured as other values, which are not limited in the present disclosure. When configuring the corresponding relationship between the information and each parameter, it is not necessarily required to configure all the corresponding relationships illustrated in each table. For example, in the table in the present disclosure, the corresponding relationships shown in some rows may not be configured. For another example, appropriate adjustments may be made based on the above table, such as splitting, merging, or the like. The names of the parameters shown in the titles of the above tables may also use other names that may be understood by the communication device, and the values or representations of the parameters may also be other values or representations that may be understood by the communication device. When implementing the above tables, other data structures may also be used, such as arrays, queues, containers, stacks, linear lists, pointers, linked lists, trees, graphs, structures, classes, heaps, hash tables or hashed lists.

The term "predefined" in the present disclosure may be understood as defined, predefined, stored, pre-stored, pre-negotiated, pre-configured, solidified, or pre-bumed.

Those of ordinary skill in the art will appreciate that the units and algorithm steps of each example described in conjunction with the embodiments of the present disclosure may be implemented in electronic hardware, or a combination of computer software and electronic hardware. Whether these functions are performed in hardware or software depends on the specific application and design constraints of the technical solution. Professional technicians may use different methods to implement the described functions for each specific application, but such an implementation should not be understood as extending beyond the scope of the present disclosure.

Those skilled in the art may clearly understand that, for the convenience and brevity of description, regarding the specific working processes of the systems, devices and units described above, reference may be made to the corresponding processes in the aforementioned method embodiments, which will not be repeated here.

The above are only specific embodiments of the present disclosure, but the protection scope of the present disclosure is not limited thereto. Any person skilled in the art who is familiar with this technical field may easily think of changes or substitutions within the technical scope defined in the present disclosure, which should be included in the protection scope of the present disclosure. Therefore, the protection scope of the present disclosure should be based on the protection scope of the claims.

## Claims

1. A sidelink (SL) communication method, performed by a first device, the method comprising:
triggering execution of a check procedure in a case where a first preset condition is satisfied,
wherein the check procedure is used for determining whether to perform a selection or reselection of a resource for transmitting a sidelink positioning reference signal (SL PRS).

2. The method according to claim 1, further comprising:
determining at least one resource for transmitting the SL PRS from a transmission resource pool in an autonomous resource allocation mode;
creating an SL grant for transmitting the SL PRS based on the at least one resource, wherein the SL grant indicates the at least one resource.

3. The method according to claim 2, further comprising:
stopping execution of the check procedure in a case where a second preset condition is satisfied,
wherein the second preset condition comprises: the first device determining cancellation of creating the SL grant, or the transmission resource pool being released.

4. The method according to any one of claims 1 to 3, wherein the first preset condition comprises:
sidelink control information (SCI) indicating to transmit the SL PRS being not within a first time period, wherein the first time period indicates a discontinuous reception (DRX) activation time of a second device, and the second device is a receiving device of the SL PRS.

5. The method according to claim 4, wherein the SCI comprises first-stage SCI and/or second-stage SCI.

6. The method according to any one of claims 1 to 5, wherein the first preset condition comprises:
a resource pool for transmitting the SL PRS being reconfigured.

7. The method according to claim 6, further comprising:
receiving reconfiguration information sent by a network device, the reconfiguration information being used to reconfigure the resource pool for transmitting the SL PRS.

8. The method according to any one of claims 1 to 7, wherein the first preset condition comprises:
no resources for creating an SL grant being selected in a resource pool for transmitting the SL PRS.

9. The method according to any one of claims 2 to 8, wherein the first preset condition comprises:
no SL PRS transmission or retransmission being performed using the SL grant during a second time period.

10. The method according to any one of claims 2 to 9, wherein the first preset condition comprises:
the transmission of the SL PRS using the SL grant not meeting a transmission requirement of the SL PRS.

11. The method according to claim 10, wherein the transmission requirement comprises at least one of:
a latency requirement;
a bandwidth requirement; or
a reliability requirement.

12. The method according to claim 11, wherein the transmission of the SL PRS using the SL grant not meeting the transmission requirement of the SL PRS comprises at least one of:
the transmission of the SL PRS using the SL grant unable to be completed within the delay requirement;
the transmission of the SL PRS using the SL grant not meeting the bandwidth requirement;
the transmission of the SL PRS using the SL grant not meeting the reliability requirement for a numeric count of retransmissions or repetitions, or the transmission of the SL PRS using the SL grant not meeting the reliability requirement for a comb size, wherein the comb size indicates an interval between occupied resource elements (REs).

13. The method according to claims 2 to 12, further comprising:
clearing the SL grant before triggering execution of the check procedure.

14. A sidelink (SL) communication device, comprising:
a processing module configured to trigger execution of a check procedure in a case where a first preset condition is satisfied,
wherein the check procedure is used for determining whether to perform a selection or reselection of a resource for transmitting a sidelink positioning reference signal (SL PRS).

15. A communication device, comprising:
a transceiver;
a memory; and
a processor connected to the transceiver and the memory, respectively, configured to control a transmission and a reception of a wireless signal from the transceiver by executing computer-executable instructions in the memory, and capable of implementing the method according to any one of claims 1 to 13.

16. A computer-readable storage medium for storing instructions that, when executed, cause the method according to any one of claims 1 to 13 to be implemented.
